# FASCICULE DE BREVET EUROPEEN

(11) **EP 0 873 458 B1**
(45) Date de publication et mention de la délivrance du brevet: **09.04.2003**
(21) Numéro de dépôt: 97900250.8
(22) Date de dépôt: 08.01.1997
(51) Int. Cl.: E04H 9/02, E01D 19/00, F16F 9/22, F16F 9/26

(54) **ENSEMBLE COMPRENANT UN PREMIER ET UN SECOND ELEMENT D'UNE STRUCTURE DE GENIE CIVIL ET UN DISPOSITIF DE LIAISON ENTRE CES DEUX ELEMENTS**
EINHEIT BESTEHEND AUS ZWEI ELEMENTE EINER HOCH- ODER TIEFBAUSTRUKTUR UND EINER VERBINDUNGSVORRICHTUNG
UNIT COMPRISING TWO ELEMENTS OF A CIVIL ENGINEERING CONSTRUCTION AND A CONNECTING DEVICE

(30) Priorité: 09.01.1996 FR 9600164
(43) Date de publication de la demande: 28.10.1998
(73) Titulaire: FREYSSINET INTERNATIONAL (STUP), F-78140 Velizy Villacoublay (FR)
(72) Inventeur: DE LA FUENTE, Carlos, F-92000 Nanterre (FR)
(74) Mandataire: CAPRI SARL
(86) Numéro de dépôt international: FR9700033
(87) Numéro de publication internationale: WO97025498

(56) Documents cités:
- WO-A-92/13158
- FR-A- 2 544 432
- FR-A- 2 625 540
- GB-A- 719 666
- GB-A- 1 362 409
- US-A- 2 090 751
- US-A- 5 462 141

## Description

La présente invention concerne un ensemble comprenant un premier et un second élément d'une structure de génie civil et un dispositif de liaison entre ces deux éléments et concerne plus particulièrement un dispositif de transmission d'effort hydraulique entre un premier et un second élément d'une structure de génie civil, tel qu'un pont.

Les dispositifs de liaison servent notamment à amortir les effets d'un séisme, en particulier dans le cas des ponts, soit par dissipation d'énergie, soit par transmission d'effort, lors des mouvements rapides imposés par le séisme.

Plus particulièrement, les dispositifs de transmission d'effort permettent le mouvement relatif de deux éléments de structure (en général la tablier, d'une part, et leurs fondations, piles ou culées, d'autre part) lorsqu'il s'agit d'un pont lors des mouvements dus principalement aux effets thermiques. En cas de mouvement rapide, par exemple en cas de séisme, le dispositif se bloque et les deux éléments sont rigidement reliés.

La grande majorité des dispositifs de transmission d'effort sont du type hydraulique ou oléodynamique, et consistent essentiellement en un cylindre ou vérin muni de deux chambres séparées par un piston. Un orifice de très petite diamètre permet le passage d'un fluide entre les chambres, et donc le mouvement du piston, à faible vitesse. En cas de fortes et rapides sollicitations entraînant le mouvement rapide du piston, l'écoulement du fluide n'est plus possible, et le dispositif se bloque.

Dans ce type de dispositif, le piston est généralement solidaire d'une tige qui traverse, de part et d'autre du piston, les deux fonds du cylindre. La tige est reliée à l'un des deux éléments de structure, et le cylindre à l'autre. Dans le cas où la course nécessaire pour le bon fonctionnement du dispositif est grande, par exemple dans les ponts de grande longueur soumis à des variations de température importantes, les tiges sont longues, et leur diamètre doit être augmenté à cause du possible flambage de la tige, soumise à un grand effort de compression. Il en résulte une augmentation non souhaitable des dimensions de l'ensemble du dispositif.

Un autre inconvénient de ce type de dispositif de transmission d'effort oléodynamique, il est nécessaire d'adjoindre un vase ou réservoir d'expansion capable d'absorber l'augmentation du volume du fluide dûe aux augmentations de température car, sans cette précaution, la pression interne du dispositif pourrait atteindre des valeurs très élevées. L'adjonction d'un tel réservoir extérieur au dispositif et de son circuit hydraulique associé est toutefois perçue comme une complication.

Le document WO 92/13158 décrit un tel dispositif de l'art antérieur où un piston mobile se déplace entre les deux chambres, l'une des chambres étant reliée à un accumulateur de gaz séparé du transmetteur d'effort. Ce dispositif présente un encombrement spatial désavantageux

La présente invention a pour but de fournir un dispositif de liaison, en particulier un dispositif de transmission d'effort qui soit compact, de fabrication et d'utilisation simple, et dont le fonctionnement est fiable.

La présente invention a également pour but de fournir un tel dispositif ne reproduisant pas les inconvénients précités. En particulier, la présente invention a pour but de fournir un dispositif de liaison qui réduit ou supprime le risque de flambage de la tige et qui fournit donc une plus grande compacité du dispositif. D'autre part, la présente invention a également pour but de fournir un tel dispositif qui soit le moins encombrant possible. En particulier, la présente invention a pour but d'éviter l'adjonction d'un ou plusieurs circuits hydrauliques extérieurs au dispositif.

La présente invention a donc pour objet un ensemble comprenant un premier et un second élément d'une structure de génie civil et un dispositif de liaison entre ces deux éléments, ledit dispositif de liaison étant adapté à permettre un déplacement relatif entre lesdits premier et second éléments de structure lors de mouvements lents, et à au moins partiellement empêcher les déplacements relatifs entre lesdits premier et second éléments de structure lors de mouvements rapides, ledit dispositif comportant un cylindre fixe par rapport audit premier élément de structure, définissant deux chambres renfermant un produit fluide et reliées entre elles par un orifice, ledit cylindre comportant une paroi fixe séparant lesdites deux chambres, chaque chambre étant délimitée, du côté opposé à ladite paroi par un piston mobile, lesdits deux pistons mobiles étant solidaires dudit second élément de structure.

En particulier, ladite structure de génie civil peut être un pont et lesdits premier et second éléments de structure peuvent être une culée, une pile ou un tablier de pont.

D'autres caractéristiques et avantages de la présente invention apparaîtront au cours de la description détaillée suivante, donnée à titre d'exemple non limitatif, en regard des dessins joints, sur lesquels :
- la figure 1 représente une vue schématique d'un dispositif de liaison connu entre deux éléments d'une structure de génie civil ;
- la figure 2 est une vue schématique représentant un mode de réalisation avantageux d'un dispositif de liaison selon l'invention ;
- la figure 3 représente une vue schématique d'un dispositif de liaison selon au autre mode de réalisation avantageux de l'invention ; et
- la figure 4 représente une vue schématique d'un dispositif de liaison incorporant un vase d'expansion interne au dispositif selon un mode de réalisation avantageux de l'invention.

La présente invention concerne un dispositif de liaison, en particulier un transmetteur d'effort, entre un premier élément de structure 10 et un second élément de structure 20 d'une structure de génie civil, en particulier d'un pont et la description détaillée suivante sera réalisée en référence à de tels éléments d'un pont.

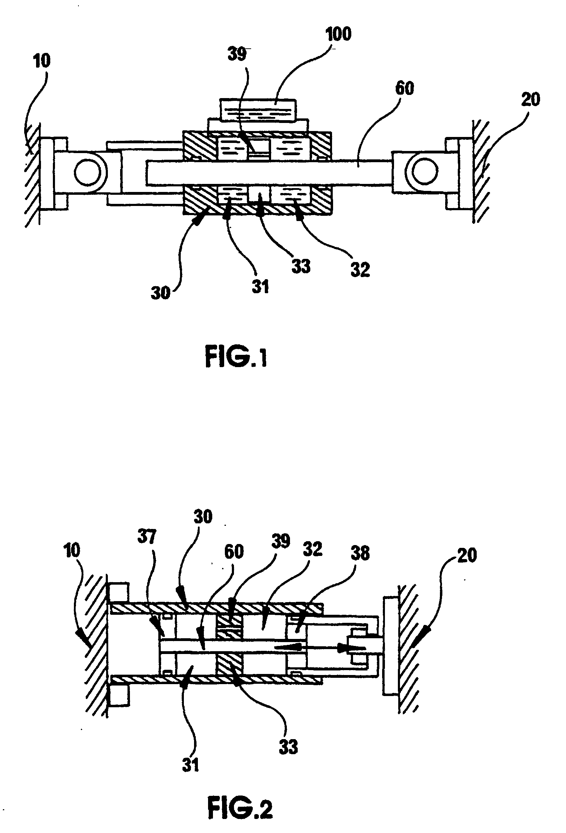

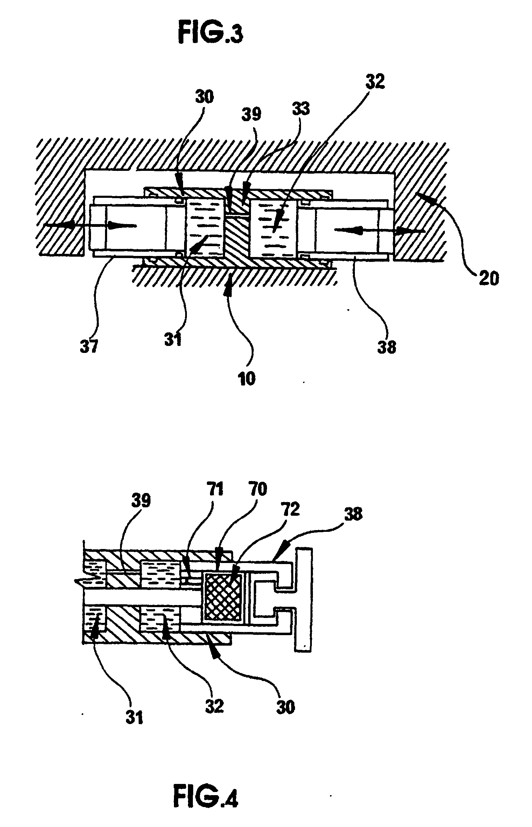

En référence à la figure 1, représentant un dispositif de liaison connu, et aux figures 2 et 3, qui représentent deux modes de réalisation différents d'un dispositif selon l'invention et dont les avantages respectifs seront décrits ultérieurement, un transmetteur d'effort comporte un cylindre 30 (ou vérin) qui est fixe par rapport à l'un des deux éléments de structure, par exemple par rapport au premier élément de structure 10. Ce cylindre 30 définit deux chambres 31, 32 renfermant un produit fluide, avantageusement de l'huile, lesdites chambres 31, 32 étant séparées par une paroi 33. Cette paroi 33 est traversée par un orifice 39 qui relie lesdites chambres 31, 32 entre les éléments de structure 10 et 20 lors de mouvements lents, et il a typiquement un diamètre de l'ordre de quelques dixièmes de millimètres. Eventuellement, cet orifice 39 pourrait être ménagé dans le corps du cylindre 30 (par exemple sous la forme d'une rainure) plutôt que dans la paroi 33, ou encore être réalisé sous la forme d'un tube externe reliant les deux chambres. En cas de secousse sismique, la pression dans au moins une des chambres 31, 32 augmente et l'écoulement de fluide n'est pas possible à travers l'orifice 39, de sorte que les deux éléments de structure sont rigidement reliés.

Eventuellement, on peut prévoir une ou deux soupapes (non représentées) dans l'orifice 39, en face de l'une ou des deux chambres 31, 32, lesdites soupapes étant adaptées à se fermer lors d'une montée de pression ou de débit déterminée, de sorte que la liaison rigide des deux éléments de structure peut être définie à partir d'une pression d'un débit ou d'une vitesse déterminée.

Dans les transmetteurs d'effort connus dans l'art antérieur et représentés schématiquement sur la figure 1, la paroi 33 forme le piston mobile à l'intérieur du cylindre 30 et ledit piston 33 est relié par l'intermédiaire d'une tige 60, qui traverse les deux fonds du cylindre 30, au second élément de structure 20, alors que le cylindre 30 est fixé sur le premier élément de structure 10. Ainsi comme mentionné précédemment, les déplacements du piston 33 découlent des forces de compression et de traction de la tige 60. Ces forces pouvant être très importantes, le risque de flambage de la tige existe.

Pour pallier cet inconvénient, l'invention prévoit de remplacer la paroi de séparation 33 mobile par une paroi de séparation 33, ou diaphragme, fixe par rapport au cylindre 30, comme représenté sur les figures 2 et 3. Cette paroi fixe 33 peut être fixée audit cylindre 30 (fig. 2), ou être réalisée d'une pièce avec celui-ci (fig. 3). En référence plus spécifiquement à la figure 2, le cylindre 30 est donc fixé sur l'élément de structure 10 et la paroi 33, fixe par rapport audit cylindre 30, définit les deux chambres 31, 32. Ladite paroi 33 incorpore avantageusement le petit orifice 39 décrit précédemment. Chaque chambre 31 et 32 est délimitée du côté opposé à ladite paroi 33 par un piston mobile, référencé respectivement 37 et 38, qui se déplace avec étanchéité dans le cylindre 30. Les deux pistons 37 et 38 sont solidaires du second élément de structure 20. En l'occurrence, sur la figure 2, le piston 38 est relié mécaniquement à ce second élément de structure 20, alors que l'autre piston mobile 37 est solidaire dudit premier piston 38 par l'intermédiaire d'une tige 60 qui traverse ladite paroi de séparation 33 des chambres 31 et 32. Plus spécifiquement, le piston 38 de la figure 2 peut être formé par un tube qui est muni à son extrémité opposée à la chambre 32 de moyens, généralement légèrement articulés, de liaison ou de fixation audit second élément de structure 20. Ce second élément de structure 20 peut par exemple être le tablier d'un pont. L'avantage principal de cette mise en oeuvre est que la tige 60 du dispositif est seulement sollicitée en traction, éliminant dans ce cas pratiquement tout danger de flambage de cette tige, de sorte que celle-ci peut avoir une dimension minimale. Cette solution est particulièrement adaptée lorsqu'il est nécessaire d'amortir les effets du séisme dans le sens axial, c'est à dire lorsque les éléments de structure 10, 20 qui doivent être liés, se trouvent en face l'un de l'autre dans le sens de leur déplacement.

Dans le mode de réalisation de la figure 3, qui représente un dispositif de liaison qui relie une pile de pont 10 à un tablier de pont 20, la tige 60 peut complètement être supprimée. A cet effet, chacun des deux pistons mobiles 37 et 38 peut être constitué sous la forme d'un tube qui, du côté de sa chambre respective 31 ou 32, se déplace avec étanchéité dans le cylindre 30, fixé sur la pile de pont 10. L'autre extrémité des pistons 37 et 38 est pourvue par exemple de butées, ou de quelconques moyens articulés, ou non, qui permettent de les relier mécaniquement au second élément de structure 20. Les pistons 37 et 38 ne sont dans ce cas pas reliés l'un à l'autre.

En cas de séisme, un au moins des deux pistons 37, 38 est sollicité et comprime le fluide de sa chambre respective. La paroi de séparation 33 incorpore le petit orifice 39 et le fonctionnement de l'amortisseur est similaire à celui décrit précédemment. Dans ce mode de réalisation, le dispositif est très compacte car la section utile du piston est maximale, en raison de l'absence de la tige. D'autre part, la tige étant remplacée par des pistons tubulaire ayant un moment d'inertie beaucoup plus grand, leur flambage est beaucoup moins critique et il n'est généralement pas nécessaire d'en tenir compte.

Une autre caractéristique avantageuse de l'invention est représentée schématiquement sur la figure 4. Ainsi, pour éviter un vase ou réservoir d'expansion extérieur au dispositif d'amortissement, comme représenté sous la référence 100 sur la figure 1, l'invention prévoit de ménager un réservoir 70 dans au moins un des pistons mobiles. Ce réservoir 70 est relié à au moins une desdites chambres 31, 32 par un petit conduit 71 avantageusement muni d'un clapet (non représenté) qui isole instantanément le réservoir 70 de la chambre à laquelle il est relié lorsque la pression dans cette dernière augmente au delà d'une valeur fixée d'avance. Ce réservoir 70 est partiellement ou totalement rempli d'un matériau compressible 72 adapté à se comprimer pour permettre une dilatation dudit produit fluide. Ce matériau compressible 72 peut par exemple être une mousse en matière plastique, par exemple un élastomère, compatible avec le produit fluide utilisé dans le dispositif. Cette mousse contient des cellules d'air fermées et est par conséquent très compressible. C'est donc ce réservoir 70 qui joue le rôle du vase d'expansion de manière très efficace et qui évite tout circuit hydraulique extérieur au dispositif.

Au montage du dispositif, le réservoir 70 est rempli de fluide tout comme les chambres 31 et 32. Le seul air contenu dans le réservoir est celui des cellules de la mousse 72. En service normal le dispositif n'est soumis à aucune pression interne significative. Lorsque la température du fluide augmente, il se dilate et grâce aux orifices qui relient la ou les chambres 31 et 32 au réservoir 70 du piston, le fluide, qui est globalement confiné, voit sa pression augmenter et, par conséquence, comprime l'air contenu dans les cellules de la mousse. Comme la dilatation du fluide est très lente, on peut considérer qu'elle se fait à température constante. L'augmentation de volume de fluide est ainsi du même ordre de grandeur que la compression de l'air des cellules. Il suffit que le volume de mousse soit suffisant pour que l'augmentation globale soit réduite à des valeurs tout à fait acceptable, de l'ordre de quelque bars au plus. Un autre avantage de ce mode de réalisation est qu'il ne comporte ni d'évent ni de purge, et il permet donc l'installation et le fonctionnement du dispositif dans n'importe quelle position. Le clapet (non représenté) dont est muni le conduit de communication 71 entre une des chambres 31, 32 et le réservoir 70 contenant la mousse, protège celui-ci ainsi que la mousse contre toute possible détérioration lorsque le dispositif fonctionne lors d'un séisme, auquel cas la pression des chambres peut atteindre plusieurs centaines de bars.

Cette caractéristique avantageuse de supprimer le vase d'expansion extérieur s'adapte plus particulièrement dans le cadre de l'invention, où le piston mobile central 33 du transmetteur d'effort représenté sur la figure 1 est remplacé par un ou deux pistons 37, 38 de forme tubulaire. Le réservoir 70 peut dans ce cas être avantageusement ménagé à l'intérieur de ce ou ces tubes formant le ou les pistons 37 et 38, comme représenté sur la figure 4. Ainsi, le dispositif dans son ensemble est très compact et présente un encombrement minimal.

Il est toutefois à noter qu'un tel réservoir 70 pourrait également être mis en oeuvre indépendamment de l'invention, par exemple dans une paroi du cylindre, ou même dans le piston mobile central du dispositif de la figure 1.

Le dispositif de liaison selon l'invention a été décrit en relation avec un transmetteur d'effort, mais ce dispositif pourrait également agir en tant qu'amortisseur. Dans ce cas, l'orifice 39 devrait être plus grand et calibré de manière adéquate

## Revendications

1. Ensemble comprenant un premier et un second élément (10, 20) d'une structure de génie civil et un dispositif de liaison entre ces deux éléments, ledit dispositif de liaison étant adapté à permettre un déplacement relatif entre lesdits premier et second éléments de structure (10, 20) lors de mouvements lents, et à au moins partiellement empêcher les déplacements relatifs entre lesdits premier et second éléments de structure (10, 20) lors de mouvements rapides, ledit dispositif comportant un cylindre (30) fixe par rapport audit premier élément de structure (10), définissant deux chambres (31, 32) renfermant un produit fluide et reliées entre elles par un orifice (39), **caractérisé en ce que** ledit cylindre (30) comporte une paroi fixe (33) séparant lesdites deux chambres (31, 32), chaque chambre étant délimitée, du côté opposé à ladite paroi (33) par un piston mobile (37, 38), lesdits deux pistons mobiles (37, 38) étant solidaires dudit second élément de structure (20).

2. Ensemble selon la revendication 1, dans lequel ladite paroi de séparation (33) des deux chambres (31, 32) comporte ledit orifice (39) qui relie lesdites deux chambres (31, 32) entre elles de telle manière à permettre un déplacement relatif entre lesdits éléments de structure (10, 20) lors de mouvements lents.

3. Ensemble selon la revendication 1 ou la revendication 2, dans lequel un premier piston (38) desdits deux pistons mobiles (37, 38) est solidaire du second élément de structure (20) et l'autre piston mobile (37) est solidaire dudit premier piston (38) par l'intermédiaire d'une tige (60) qui traverse ladite paroi de séparation (33) des chambres (31, 32).

4. Ensemble selon la revendication 1 ou la revendication 2, dans lequel les deux pistons mobiles (37, 38) solidaires du second élément de structure (20) ne sont pas directement reliés l'un à l'autre.

5. Ensemble selon l'une quelconque des revendications précédentes, dans lequel au moins un desdits piston mobile (37, 38) est réalisé sous la forme d'un tube creux dont une extrémité coulisse avec étanchéité dans le cylindre (30), l'autre extrémité comportant des moyens de liaison audit second élément de structure (20).

6. Ensemble selon l'une quelconque des revendications précédentes, dans lequel au moins un piston mobile (37, 38) comporte un réservoir (70) relié à au moins une desdites chambres (31, 32) par un petit conduit (71), ledit réservoir (70) étant au moins partiellement rempli d'un matériau compressible (72) adapté à se comprimer pour permettre une dilatation dudit produit fluide.

7. Ensemble selon la revendication 6, dans lequel ledit matériau compressible (72) est une mousse en matière plastique compatible avec ledit produit fluide.

8. Ensemble selon l'une quelconque des revendications précédentes, dans lequel ladite structure de génie civil est un pont et lesdits premier et second éléments de structure (10, 20) peuvent être une culée, une pile ou un tablier de pont.

9. Ensemble selon l'une quelconque des revendications précédentes, dans lequel le dispositif est un transmetteur d'effort qui est adapté à permettre un déplacement relatif entre lesdits premier et second éléments de structure (10, 20) lors de mouvements lents et qui empêche tout déplacement relatif entre lesdits premier et second éléments de structure (10, 20) lors de mouvements rapides.

## Claims

1. An assembly comprising a first and a second element (10, 20) of a civil engineering structure and a tie device between these two elements, the tie device being suitable for enabling said first and second structural elements (10, 20) to be displaced relative to each other during slow movements, and for preventing at least in part said first and second structural elements (10, 20) from being displaced relative to each other during rapid movements, said device including a cylinder (30) which is stationary relative to said first structural element (10) and which defines two chambers (31, 32) that contain a fluid substance and that are interconnected via an orifice (39), said tie device being **characterized in that** said cylinder (30) includes a wall (33) that separates said two chambers (31, 32), each chamber being defined at its end remote from said wall (33) by a moving piston (37, 38), said two moving pistons (37, 38) being secured to said second structural element (20).

2. An assembly according to claim 1, in which said separator wall (33) for separating the two chambers (31, 32) is provided with said orifice (39) which interconnects said two chambers (31, 32) so as to enable said structural elements (10, 20) to be displaced relative to each other during slow movements.

3. An assembly according to claim 1 or 2, in which a first piston (38) of said two moving pistons (37, 38) is secured to the second structural element (20), and the other moving piston (37) is secured to said first piston (38) via a rod (60) that passes through said separator wall (33) that separates the chambers (31, 32).

4. An assembly according to claim 1 or 2, in which both of the moving pistons (37, 38) are secured to the second structural element (20) and they are not coupled to each other directly.

5. An assembly according to any preceding claim, in which at least one of said moving pistons (37, 38) is implemented in the form of a hollow tube, one end of which is mounted to slide in fluid-tight manner in the cylinder (30), the other end being provided with coupling means for coupling to said second structural element (20).

6. An assembly according to any preceding claim, in which at least one moving piston (37, 38) includes a tank (70) connected to at least one of said chambers (31, 32) via a small duct (71), said tank (70) being filled at least partially with a compressible material (72) suitable for being compressed to enable said fluid substance to expand.

7. An assembly according to claim 6, in which said compressible material (72) is a foam made of a plastics material that is compatible with said fluid substance.

8. An assembly according to any preceding claim, in which said civil engineering structure is a bridge, and said first and second structural elements (10, 20) may be an abutment, a pier, or a deck of a bridge.

9. An assembly according to any preceding claim, in which the device is a force transmitter which is suitable for enabling said first and second structural elements (10, 20) to be displaced relative to each other during slow movements, and for preventing said first and second structural elements (10, 20) from being displaced relative to each other during rapid movements.

## Patentansprüche

1. Baugruppe, aufweisend eine erstes und ein zweites Baustrukturelement (10, 20) und eine Verbindungsvorrichtung zwischen diesen beiden Elementen, wobei die Verbindungsvorrichtung dazu ausgelegt ist, eine Relativverschiebung zwischen den ersten und zweiten Strukturelementen (10, 20) bei langsamen Bewegungen zu ermöglichen, und zumindest teilweise die Relativverschiebungen zwischen den ersten und zweiten Strukturelementen (10, 20) bei schnellen Bewegungen zumindest teilweise zu unterbinden, wobei die Vorrichtung einen Zylinder (30) aufweist, der in bezug auf das erste Strukturelement (10) feststeht und zwei Kammern (31, 32) festlegt, die ein Produktfluid einschließen und miteinander durch eine Öffnung (39) verbunden sind, **dadurch gekennzeichnet, dass** der Zylinder (30) eine feststehende Wand (33) aufweist, welche die beiden Kammern (31, 32) trennt, wobei jede Kammer auf der Seite in Gegenüberlage zu der Wand (33) durch einen beweglichen Kolben (37, 38) begrenzt ist, wobei die beiden beweglichen Kolben (27, 28) mit dem zweiten Strukturelement (20) fest verbunden sind.

2. Baugruppe nach Anspruch 1, wobei die Trennwand (33) der beiden Kammern (31, 32) die Öffnung (39) umfasst, welche die beiden Kammern (31, 32) miteinander derart verbindet, dass eine Relativverschiebung zwischen den Strukturelementen (10, 20) bei langsamen Bewegungen möglich ist.

3. Baugruppe nach Anspruch 1 oder 2, wobei ein erster Kolben (38) der beiden beweglichen Kolben (37, 38) mit dem zweiten Strukturelement (20) fest verbunden ist, und wobei der andere bewegliche Kolben (37) mit dem ersten Kolben (38) durch eine Stange (60) verbunden ist, welche die Trennwand (33) der Kammern (31, 32) durchsetzt.

4. Baugruppe nach Anspruch 1 oder 2, wobei die beiden beweglichen Kolben (37, 38), die mit dem zweiten Strukturelement (20) fest verbunden sind, nicht direkt miteinander in Verbindung stehen.

5. Baugruppe nach einem der vorangehenden Ansprüche, wobei zumindest einer der beweglichen Kolben (37, 38) in Form eines hohlen Rohrs verwirklicht ist, dessen eines Ende in dem Zylinder (30) abdichtend gleitet, während das andere Ende das Verbindungsmittel des zweiten Strukturelements (20) aufweist.

6. Baugruppe nach einem der vorangehenden Ansprüche, wobei zumindest ein beweglicher Kolben (37, 38) einen Vorratsbehälter (70) umfasst, der zumindest mit einer der Kammern (31, 32) durch einen kleinen Kanal (71) verbunden ist, wobei der Vorratsbehälter (70) zumindest teilweise mit einem kompressiblen Material (72) gefüllt ist, das dazu ausgelegt ist, sich zu komprimieren, um eine Verdünnung des Produktfluids zu ermöglichen.

7. Baugruppe nach Anspruch 6, wobei das kompressible Material (32) ein Kunststoffschaum ist, der mit dem Produktfluid kompatibel ist.

8. Baugruppe nach einem der vorangehenden Ansprüche, wobei das Strukturelement eine Brücke ist, und wobei die ersten und zweiten Strukturelemente (10, 20) ein Widerlager, eine Säule oder ein Brückenüberbau sein können.

9. Baugruppe nach einem der vorangehenden Ansprüche, wobei die Vorrichtung ein Kraftüberträger ist, der dazu ausgelegt ist, eine Relativverschiebung zwischen den ersten und zweiten Strukturelementen (10, 20) bei langsamen Bewegungen zu ermöglichen, und der jegliche Relativverschiebung zwischen den ersten und zweiten Strukturelementen (10, 20) bei schnellen Bewegungen unterbindet.
